# EUROPEAN PATENT SPECIFICATION

(11) **EP 2 974 855 B1**
(45) Date of publication and mention of the grant of the patent: **20.02.2019**
(21) Application number: 15176270.5
(22) Date of filing: 10.07.2015
(51) Int. Cl.: B29D 99/00, B32B 37/14, B32B 3/12, D04H 3/16, B32B 5/02, D04H 3/14, B29D 24/00

(54) **COMPOSITE MATERIALS COMPRISING HONEYCOMB CORES BASED ON THERMOPLASTIC SYNTHETIC FIBER SPUNBONDED NON-WOVENS**
VERBUNDWERKSTOFFE UMFASSEND WABENKERNE AUF BASIS VON THERMOPLASTISCHEN SYNTHESEFASERSPINNVLIESEN
MATERIAUX COMPOSITES COMPRENANT DES NOYAUX EN NIDS D'ABEILLES A BASE DE NON-TISSÉ FILÉ-LIÉ DE FIBRES SYNTHETIQUES THERMOPLASTIQUES

(30) Priority: 14.07.2014 DE 102014010332
(43) Date of publication of application: 20.01.2016
(73) Proprietor: Johns Manville Europe GmbH, 86399 Bobingen (DE)
(72) Inventor: Mögel, Julia, 82281 Egenhofen (DE); Lehnert, Jörg, 86830 Schwabmünchen (DE)
(74) Representative: Mai Dörr Besier European Patent Attorneys

(56) References cited:
- EP-A1- 0 601 969
- WO-A1-2014/138898
- JP-A- 2000 006 279
- JP-A- 2010 083 079
- JP-A- 2010 126 573
- US-A- 3 919 382
- US-A- 5 879 780

## Description

The invention concerns honeycomb cores based on thermoplastic synthetic fiber non-wovens, a method for manufacturing the honeycomb cores, as well as composite materials containing such honeycomb cores.

Honeycomb core materials resp. elements with a predominantly hexagonal honeycomb structure are used in many cases and increasingly in many applications. Due to the high pressure resistance and high stiffness of such structures, they can be used, along with their low weight, for example in the lightweight construction industry. Here, the honeycomb cores usually form the core material of a sandwich-like compound consisting of two planar materials.

Sandwich-like honeycomb core-composite materials with a supporting honeycomb core of paper or cardboard can be equipped resp. designed in such a way that they can bear several tons per m². The planar materials, which form the covering layers of the sandwich-like compound can be made of different materials depending on the application.

Furthermore, the use of honeycomb materials is also known for consolidation of grounds. For this purpose, for soft, little stable ground, such as a sandy and/or marshy underground, honeycomb materials are placed onto the underground and the honeycomb cells are filled with earthenware or another suitable material. The filled honeycomb materials thereby reach a pressure resistance, which comes close to the pressure resistance of concrete, so that the load-carrying capacity of the ground is clearly increased. This procedure is applied among others in road construction. Compared with concrete, these materials have the advantage that the honeycomb material is water permeable, so that a good draining can be obtained.

Depending on the range of application, the honeycomb core materials have honeycomb cells of different diameters, so that, for example, filling of a construction material or introduction of a filler material is facilitated. For applications, for which the honeycomb cells of the honeycomb core materials are filled with coarser materials, diameters of a few centimeters to 50 cm, in some cases even more, proved unpractical. To ensure that the filling does not lead to turning-down of the upper edge during the filling, the honeycomb material must be relatively solid. A comparable requirement also results in the already mentioned lightweight construction, since the honeycomb core material usually forms the core material of the sandwich-like compound and both planar materials, which form the external sides of the sandwich-like compound must be bound to the core.

For manufacturing the honeycomb core materials, relatively thick textile surfaces were used to date and several layers of the textile surface were bound together by means of a complex sewing process. Subsequently, the sewed compound was pulled to form the honeycomb body to be achieved. Instead of the sewing processes, the individual layers can be glued, as is described in EP-A-0,512,433, or welded, as is described in WO 2006/026971. Subsequently, the multi-layer compound is pulled apart to form the honeycomb core material. The opened honeycomb core material must subsequently be fixed, so that the honeycomb structure, usually a predominantly hexagonal structure, is consolidated.

In addition to the above-described manufacturing method, the honeycomb core material can also be manufactured through combination of several trapezoidally deformed textile fabrics, respectively, such as is described in WO 89/10258.

Other nonwoven material for manufacturing of a honeycomb core material are disclosed in JP 2000 006279 A. In addition, other deep-draw able materials are known from WO 2014/138898, which relates to a deep-draw able mat for forming filter material for single use coffee capsules

In addition to the above-described honeycomb cores consisting of synthetic textile surface materials, honeycomb cores consisting of cellulose-based materials are also known, which already deliver good mechanical values; it is, however, disadvantageous that they are not thermally formable and tend to degradation in humid environments.

Other honeycomb cores consisting of extruded polyolefin-material (e.g. polypropylene) are likewise already known. They exhibit in a humid environment a better failure behavior and are, in addition, thermally formable. However, the maximum temperature is relatively low both when using and also in the thermal forming process, whereby the usefulness of these honeycombs is restricted for some applications. In addition, the extruded materials are not porous, whereby neither a pressure compensation within the production process nor impregnation with resins is possible. In addition, extruded honeycomb cores have a higher weight.

Further materials from which honeycomb cores can be formed are metallic alloys, for example based on aluminium, which are formable and moisture resistant. However, the binding of cover layers on the thin edges of the inert, non porous metallic materials is more difficult, and as a result of the economical analysis of the high quality alloys, their use is not interesting for many applications.

The materials known in the art to date for manufacturing honeycomb cores based on thermoplastic synthetic fiber non-wovens do, however, have different deficiencies. Among others, a known problem consists in the fact that for binding the outer cover layer to the honeycomb core, pressure exchange must be guaranteed with the surrounding air during the grouting process, so that binding of the cover layer can take place uniformly and the working speed allows economical manufacturing. On the other hand, sufficient mechanical stability with the lowest possible weight must be achieved. Furthermore, the material forming the honeycomb cores must have a good edge stiffness as well as ensure connection of the cover layer to a good compound between the cover layer and the core material. Furthermore, the core material should have a good temperature resistance, thermal formability, flexural stiffness and sufficient failure behavior in a humid environment. In addition, it is advantageous if the honeycomb core material allows for filling, in particular subsequent filling of the honeycomb structure in the finished sandwich-like composite material.

The preceding object is solved, as well as further task that are not explicitly mentioned, by the use of a special spunbonded non-woven fabric based on thermoplastic organic synthetic fibers.

The object of the present invention is the use of a spunbonded non-woven fabric based on thermoplastic organic synthetic fibers for manufacturing honeycomb core materials, characterized in that
a) the spunbonded non-woven fabric used has a weight per unit area between 50 and 500 g/m², wherein the preceding information refers to a spunbonded non-woven fabric without any chemical binders and other additives,
b) the spunbonded non-woven fabric used is made of fibers, which have a titer in the range of 1.0 to 20 dtex, preferably 1.5 to 10 dtex,
c) the spunbonded non-woven fabric used comprises no chemical binders,
d) the spunbonded non-woven fabric used comprises at least one thermoplastic binder, the melting point of which is at least 10°C, preferably at least 20°C, in particular at least 30°C below the melting point of the fiber according to b), is however at least 170°C so as to maintain the temperature resistance,
e) the spunbonded non-woven fabric used has an air permeability in the range of 5 - 2000 l/m²sec, preferably 100 - 300 l/m²sec @ 200 Pa measured according to EN-ISO 9237.

The term "chemical binder" means in the framework of this application low-viscosity reactive systems, which harden by chemical reaction.
The use according to the invention in the manufacturing of honeycomb core materials allows on the one hand the pressure compensation between the individual honeycomb cells of the honeycomb core material and fulfills on the other hand the requirements towards honeycomb core materials as mentioned at the beginning, in particular in the manufacturing of sandwich-like composite materials. The spunbonded non-woven fabric used according to the invention allows the manufacturing of honeycomb core materials with high edge stiffness, good binding to both cover layers in the case of sandwich-like composite materials, a good absorption of liquid binder systems, good temperature resistance, good thermal formability, high flexural stiffness and a good failure behavior in a humid environment. Due to the semi-structural property of the spunbonded non-woven fabric used according to the invention, different manufacturing processes can be used for the formation of the honeycomb structures.

### SPUNBONDED NON-WOVEN FABRIC

Within the scope of this description, the term "spunbonded non-woven fabric based on thermoplastic organic synthetic fibers" is to be understood in its widest meaning.

Preferably, the spunbonded non-woven fabric used according to the invention only comprises fibers made of thermoplastic organic polymers.

Spunbonded non-wovens are also referred to as so-called spunbonds, which are manufactured by random deposition of newly melt-spun filaments. They consist of continuous synthetic fibers composed of melt-spinnable, thermoplastic, organic polymer materials. Suitable polymer materials are, e.g., polyamides such as, e.g., polyhexamethylene diadipamide, polycaprolactam, aromatic or partially aromatic polyamides ("aramids"), aliphatic polyamides such as, e.g., nylon, partially aromatic or fully aromatic polyesters, polyphenylene sulfide (PPS), polymers with ether and keto groups such as, e.g., polyetherketones (PEK) and polyetheretherketone (PEEK) or polybenzimidazoles.

Preferably, the melt-spinnable thermoplastic, organic polymer materials have a melting point of at least 180°C, preferably of at least 200°C.

Preferably, the spunbonded non-woven fabrics consist of melt-spinnable polyesters. The polyester materials can, in principle, be any known type suitable for fiber production. Such polyesters consist predominantly of components derived from aromatic dicarboxylic acids and from aliphatic diols. Commonly used aromatic dicarboxylic acid components are the bivalent radicals of benzenedicarboxylic acids, especially of the terephthalic acid and the isophthalic acid; commonly used diols have 2 to 4 carbon atoms, wherein ethylene glycol is particularly suitable. Spunbonded fabrics which consist of at least 85 mol% of polyethylene terephthalate are particularly advantageous. The remaining 15 mol% are then comprised of dicarboxylic acid units and glycol units which act as so-called modifiers and allow the person skilled in the art to targetedly influence the physical and chemical properties of the produced filaments. Examples of such dicarboxylic acid units are radicals of isophthalic acid or aliphatic dicarboxylic acid, such as glutaric acid, adipic acid, sebacic acid; examples of modifying diol radicals are those composed of longer-chain diols, e.g. propane diol or butane diol, of diethylene or triethylene glycol or, if present in small quantities, of polyglycol with a molecular weight of about 500 to 2000.

Polyesters containing at least 95 mol% of polyethylene terephthalate (PET) are particularly preferred, especially those composed of unmodified PET.

If the spunbonded non-woven fabrics used according to the invention should additionally have a flame-retardant action, it is advantageous if they were spun from polyesters modified in a flame-retardant manner. Such flame-retardantly modified polyesters are known. They contain additives of halogen compounds, particularly bromine compounds or, which is particularly advantageous, they contain phosphonic compounds that are condensed into the polyester chain.

Particularly preferably, the spunbonded non-woven fabrics contain flame-retardantly modified polyesters containing in the chain modules with the formula (I) 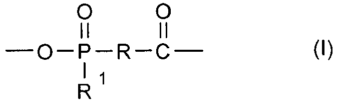 wherein R is alkylene or polymethylene with 2 to 6 C atoms or phenyl and R¹ is alkyl with 1 to 6 C atoms, aryl or aralkyl, that are condensed into it. Preferably, in the formula (I) R means ethylene and R¹ methyl, ethyl, phenyl or o-, m- or p-methylphenyl, particularly methyl. Such spunbonded non-woven fabrics are, for example, described in DE-A-39 40 713.

The polyesters contained in the spunbonded non-woven fabrics preferably have a molecular weight corresponding to an intrinsic viscosity (IV) of 0.6 to 1.4, measured in a solution of 1 g polymer in 100 ml dichloroacetic acid at 25 °C.

The single titers of the fibers of the spunbonded non-woven fabric are between 1.0 and 20 dtex, preferably 1.5 to 10 dtex.

The spunbonded non-woven fabric used has a weight per unit area between 50 and 500 g/m², preferably 100 and 300 g/m², wherein the preceding information refers to a spunbonded non-woven fabric without any chemical binders and other additives.

The spunbonded non-woven fabric used according to the invention is essential free of chemical binders, i.e. it contains between 0 and up to 5% by weight (with reference to the textile fabric) of chemical binders resp. substances, which are equivalent or comparable chemical binders but, however, can originate from Aviagen or the like. Particularly preferably, spunbonded non-woven fabrics are used, which have no addition of chemical binders. Particularly preferably, spunbonded non-woven fabrics are used, which are exclusively pre-consolidated mechanically and/or by means of thermoplastic binders.

The polymer fibers forming the spunbonded non-woven fabrics can have a practically round cross-section or also other forms such as dumbbell-shaped, kidney-shaped, triangular or tri-lobed or multi-lobed cross-sections.

The spunbonded non-woven fabrics can have a single-layer or multi-layer structure.

The fibers forming the spunbonded non-woven fabric can be modified by customary additives, e.g., by antistatic agents such as carbon black.

The spunbonded non-woven fabric used according to the invention has an air permeability in the range of 5 - 2000 l/m²sec, preferably 100 - 300 l/m²sec @ 200 Pa measured according to EN-ISO 9237.

The spunbonded non-woven fabric used according to the invention preferably has a maximum tractive force (in the longitudinal direction) of at least 100 N/5 cm, particularly preferably at least 200 N/5 cm, measured according to DIN 29073, Part 3 (1992).

The spunbonded non-woven fabric used according to the invention preferably has a maximum tractive force (in the transverse direction) of at least 50 N/5 cm, particularly preferably at least 100 N/5 cm, measured according to DIN 29073, Part 3 (1992).

Particularly preferably, a spunbonded non-woven fabric is used, which has a combination of the above-mentioned parameters of air permeability, maximum tractive force (in the longitudinal and/or transverse direction).

For generating the semi-structural property of the spunbonded non-woven fabric used according to the invention, the latter contains at least one thermoplastic binder, the melting point of which is at least 10°C, preferably at least 20°C below the melting point of the fiber according to b), however at least 170°C. The thermoplastic binder can be introduced in the form of a separate binder fiber, powder and/or granulate into the spunbonded non-woven fabric. Furthermore, the thermoplastic binder can also be available in the form of the low-melting component of a bi-component fiber.

The quantity of thermoplastic binder is 10 - 50 % by weight, preferably 10 - 30 % by weight, each with reference to the total weight of the spunbonded non-woven fabric.

Insofar as the thermoplastic binder is introduced in the form of a separate binder fiber, a granulate or in the form of the low-melting component of a bi-component fiber, one speaks of a fusible binder-consolidated spunbonded non-woven fabric.

The fusible binder-consolidated spunbonded non-woven fabric therefore comprises carrier and hot melt adhesive fibers and/or bi-component fibers with a carrier and binder component. The carrier and hot-melt adhesive fibers resp. components can be derived from any thermoplastic, filament-forming polymers. Additionally, carrier fibers can also be derived from non-fusing filament-forming polymers. Such fusible binder-consolidated spunbonded fabrics are fundamentally described, for example, in EP-A 0,446,822 and EP-A 0,590,629.

Examples of polymers from which the carrier fibers resp. the carrier fiber components can be derived are polyacrylonitrile, essentially aliphatic polyamides, such as nylon 6.6, primarily aromatic polyamides (aramids), such as poly-(p-phenylene terephthalate) or copolymers containing a content of aromatic m-diamine units to improve the solubility, or poly-(m-phenylene isophthalate), essentially aromatic polyesters, such as poly-(p-hydroxybenzoate), or preferably essentially aliphatic polyesters, such as polyethylene terephthalate.

The relative proportion of the two fiber types may be selected within wide limits, whilst making sure that the proportion of the hot melt adhesive fibers does not exceed the above mentioned proportion of thermoplastic binder. Through bonding the carrier fibers to the hot melt adhesive fibers, a semi-structural property that is sufficient for the desired application is achieved, whilst on the other hand ensuring the necessary air permeability. The proportion of the hot-melt derived from the hot-melt fiber in the spunbonded non-woven fabric is usually 10 - 50 % by weight, preferably 10 - 30 % by weight (based upon the total weight of the non-woven fabric).

Hot melt polymers from the group of the polymers having a melting point decreased by 10 to 50 °C, preferably 30 to 50 °C compared to the raw material of the non-woven fabric are suitable as hot melt adhesive. Examples of such hot melt adhesives are polybutylene terephthalate, or polyethylene terephthalate modified by the condensation of longer-chain diols and/or isophthalic acid or aliphatic dicarboxylic acid.

The hot melt adhesives are preferably introduced in the form of fibers as staple fibers or endless yarns into the spunbonded non-woven fabric or in the form of so-called bi-component fibers, wherein the above-mentioned materials for the carrier fibers form the mechanical strength and the above-mentioned materials for the hot melt adhesive fibers form the second component of the bi-component fiber, which are used for the consolidation.

The carrier fibers and hot melt adhesive fibers are preferably made up of one class of polymers. This implies that all of the fibers used are selected from one class of substances, so that these can readily be recycled after usage. If the carrier fibers consist of polyester, for example, the hot melt adhesive fibers will likewise be of polyester, e.g. PBT, or selected as sheath from a mixture of polyesters, e.g. in the form of bi-component fibers with PET in the core and a polyethylene terephthalate copolymer having a low melting point. In addition, however, bi-component fibers which are made up of different polymers are also possible. Examples of these are bi-component fibers of polyester and polyamide (core/sheath).

The monofilament titer of the carrier fibers and the hot melt adhesive fibers may be selected within said limits.

The manufacturing of the spunbonded non-woven fabric used according to the invention takes place by means of individual measures and devices known per se.

The melted polymer is extruded through a plurality of spinneret rows behind one another or groups of spinneret rows and the spun polymer streams are stretched in a known manner, and are laid on a conveyor belt, e.g., by using a rotating baffle plate in dispersion texture.

The optional consolidation is also implemented by means of known method, in particular by mechanical methods, in particular by means of calendering and optionally through needling.

The calendering takes place preferably with a line pressure of more than 35 daN/cm, preferably more than 45 daN/cm and a temperature above the softening temperature of the binder system. In this process, the nonwoven fabric can be consolidated with an embossing roller, which has geometric embossed structures, preferably fine-meshed geometric embossed structures (e.g. screen embossing). The calender can likewise have a smooth structure.

Instead of calendering, the consolidation of the spunbonded non-woven fabric can also be carried out by the laminating installation, subsequent calender rolls or double-band presses, wherein the interaction of exerting pressure and temperature is equivalent to the above-mentioned consolidation step.

The surface temperature of the calender roll resp. the equivalent laminating installation, calender rolls or double-band pressing is by at least 10°C, preferably at least 20°C higher than the melting temperature of the thermoplastic binder. Thus, the surface temperature of the pressure exerting top surface is preferably between 180 and 260°C, in particular between 225 and 250°C.

Through the interaction of fiber fineness, raw material properties, pressure, temperature and, optionally, embossing, the air permeability / porosity of the nonwoven fabric is determined as well as the edge stiffness. The spunbonded non-woven fabrics according to the invention show in particular a high edge stiffness and are therefore particularly well suited for manufacturing of honeycomb cores.

For manufacturing of honeycomb cores, the spunbonded non-woven fabric suggested according to the invention are bonded by thermal welding or ultrasound-welding in accordance with EP 1792014.

For manufacturing of honeycomb cores, the spunbonded non-woven fabric suggested according to the invention are fed into a welding device, usually at room temperature, in the form of webs. Two web sections arranged opposite to each other are melted section by section with supply of heat, the melts are then combined and cooled down. The cooling can be supported by cold air supply. The web sections form in the melted and then cooled down areas a monolithic block, which is macroscopically homogeneous. The welded web sections are then connected with a further web section in the same manner, wherein the "weld seams" are arranged in the longitudinal direction of the webs offset with respect to the already available weld seams.

The preferred welding method used is based upon the principle of external heating and/or the principle of the internal heating.

For a method according to principle of external welding, heat is introduced by means of heating elements from the outside into the web section until both web sections have reached the melting temperature. The heat is conducted through the web section until the surfaces facing each other are sufficiently heated. The heat can in this process only be formed by a web section, but it is also possible to heat both web sections to be bonded.

For a method according to the principle of internal heating, a heating element is in contrast placed between the web sections to be bonded. The web sections are therefore heated merely on the sides, which are to be bonded together later. For the method in accordance with the principle of internal heating, it is in addition possible, through a targeted process management, to control the welding in such a way that only the non-woven fabric layers that are heated and to be welded are welded. The remaining areas of the non-woven fabric perpendicular to the welded surface thus remain non-welded and preserve their porosity.

Furthermore, a combination of both methods is also possible. In particular for honeycomb core materials with large honeycomb elements and and high weight per unit area, it is meaningful to heat the web sections from the outside and from the inside. The heat then reliably reaches all fibers.

In addition to purely thermal welding methods, it is basically also possible to apply ultrasound methods and/or microwave methods as more or less contactless welding methods. These methods are likewise known from the literature; in this case, heating of the point to be welded is carried out by means of energy-rich electromagnetic waves.

The above-mentioned methods are to be understood only as examples; the only thing that is decisive for the manufacturing of a honeycomb core material according to the invention is that a sufficiently stable welded joint is formed. Further details with respect to the above-mentioned method are given in EP 1792014.

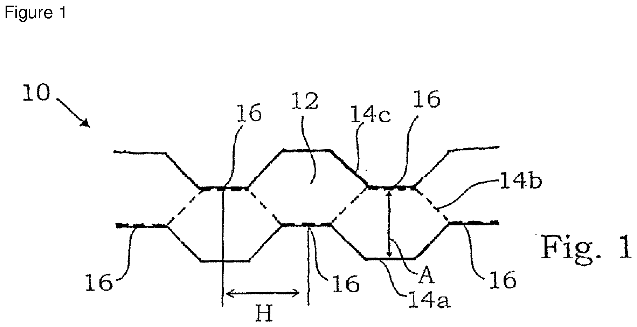

Figure 1 shows in a simplified basic representation a section from a honeycomb core material (10). The latter has in the present exemplary embodiment hexagonal cells (12).

The honeycomb core material (10) is formed from a spunbonded non-woven fabric (14), i.e. (14 a), (14 b), (14 c) proposed according to the invention, and has sections (14 a) that are bound to one another. The sections (14 a), (14 b), (14 c) are bound section by section via connecting sections (16) with one another, wherein the connecting sections (16) are offset from a web section to another web section by an amount H. Depending on selection of the size of the offset H, the shape of the cell (12) can be adapted to the desired conditions. H is the distance from center of composite to center of composite.

Furthermore, Figure 1 shows a cell division A, which quasi designates the height of a cell (12). The cell division A is preferably more than 5 mm.

For manufacturing the honeycomb core material according to the invention, the welded compound joined together is fanned-apart. Depending on the application of the honeycomb core material, it can be cut beforehand in thinner fabric webs and subsequently fanned-apart are.

Usually, there is a fanning of the joined web sections (14a), (14 b) to result in the final honeycomb material (10). Depending on the application and the client, this may also be carried out later, for example on the operating site of the honeycomb core material.

After enough web sections (14) were joined together, they are heated. Heating takes place to a temperature range that is minimally near the melting temperature of the thermoplastic binder, e.g. of the fusible binder fibers (lower limit) and at least 10°C below the melting temperature of the carrier fibers (upper limit). The heating can be done for example in a hot air furnace. The temperature of the hot air blown into the hot air furnace is minimally near the melting temperature of the thermoplastic binder resp. of the fusible binder fibers (lower limit) and at least 10°C below the melting temperature of the carrier fibers (upper limit). The hot air furnaces used according to the invention are known to those skilled in the art. In addition, IR heating systems can also be used.

The heated, previously welded spunbonded non-woven fabric webs are subsequently pulled apart mechanically in such a manner that the honeycomb cells open and the desired honeycomb core material forms after cooling down. The latter can be brought to suitable dimensions with suitable methods; for example, fanned-apart sections can be cut off the strand that forms.

The method according to the invention for manufacturing the honeycomb core material according to the invention therefore has the following steps:
(a) providing a thermally mergeable spunbonded non-woven fabric (14),
(b) welding two web sections (14a) (16) of the thermally mergeable spunbonded non-woven fabric (14) through connecting a plurality of connecting sections (16),
(c) welding of the assembled web sections (14 a), (14 b) with a next web section (14 c) according to the same method, wherein the new connecting sections (16) are arranged offset (H) with respect to the previously formed connecting sections (16),
(d) repetition of step (c) any number of times,
(e) heating of the compound obtained after step (d),
(f) fanning of the warmed up compound according to (e) towards the honeycomb core material (10),
(g) cooling down of the fanned-apart honeycomb core material (10) for fixing of the formed honeycomb cores,
characterized in that the spunbonded non-woven fabric used in step (a)
I) has a weight per unit area between 50 and 500 g/m², wherein the preceding information refers to a spunbonded non-woven fabric without any chemical binders and other additives,
II) the spunbonded non-woven fabric is made of fibers, which have a titer in the range of 1.0 to 20 dtex, preferably 1.5 to 10 dtex,
III) the spunbonded non-woven fabric comprises no chemical binders,
IV) the spunbonded non-woven fabric comprises at least one thermoplastic binder, the melting point of which is at least 10°C, preferably at least 20°C, in particular at least 30°C below the melting point of the fiber according to II), is however at least 170°C so as to maintain the temperature resistance,
V) the spunbonded non-woven fabric has an air permeability in the range of 5 - 2000 l/m²sec, preferably 100 - 300 l/m²sec @ 200 Pa measured according to EN-ISO 9237, and
VI) the heating according to step e) to a temperature corresponding to the melting temperature of the thermoplastic binder resp. of the fusible binder fibers (lower limit) and at least 10°C below the melting temperature of the carrier fibers (upper limit).

Alternatively, fanning of the previously welded spunbonded non-woven fabric can also take place in cold conditions, i.e. they are pulled apart mechanically without prior heating, so that the honeycomb cells open. For fixing the desired honeycomb core material, chemical binders are added before or during fanning, which chemical binders subsequently harden through chemical reaction, e.g. self-cross-linking binders.

Cut-off of the honeycomb core carriers can be carried out prior to or after mounting. The cut-off operation that determines the honeycomb height preferably takes place prior to pulling apart the spunbonded non-woven fabrics. Pulling apart of the spunbonded non-woven fabric or stands can be carried out directly after welding of the spunbonded non-woven fabric or in a separate process step to a later point in time.

As set forth, the honeycomb structure can, as an alternative to thermal fixing of the honeycombs (pulling apart with heat and subsequent cooling), also be realized through pulling apart and fixing by means of chemical binders without the influence of temperature.Depending on the chemical binder used, the hardening can be accelerated by supply of heat (hot air) or thermal radiation (IR radiation).

### HONEYCOMB CORE

The honeycomb cores manufactured according to the invention have a good edge stiffness. The edge stiffness can be determined by means of measurement of the specific edge crushing resistance (see measurement methods). The honeycomb cores according to the invention reach in this process values of > 1, preferably >1.1, in particular >1.2.

Furthermore, the honeycomb cores manufactured according to the invention have in the area of spunbonded non-woven fabrics, which form the non-welded areas of the honeycomb cell an almost unchanged air permeability in the range of 5 - 2000 l/m²sec, preferably 100 - 300 l/m²sec @ 200 Pa measured according to EN-ISO 9237.

The honeycomb cores manufactured according to the invention have an operating temperature resistance of >110°C and, for a typical volume weight of 20 - 70 kg/m³ (without additional binder or filling) a pressure resistance of >0.8 MPa. The pressure resistance can be determined by means of usual measurement methods.

Due to the presence and the selection of the melting point between the thermoplastic binder and the melting point of the fibers of the spunbonded non-woven fabric, the honeycomb core manufactured according to the invention can be used in so-called thermal forming processes. Here, the honeycomb core manufactured according to the invention are heated over the softening point up to the melting point of the thermoplastic binder, e.g. through infrared radiator or contact heating, and then transformed in the cold mold. By means of the honeycomb core manufactured according to the invention, complex sandwich structures are thus possible and a decorative top surface, e.g. textile, film etc., can be applied with or as a constituent element of the cover layer.

### HONEYCOMB CORE COMPOSITE MATERIAL

For manufacturing of sandwich-like composite materials, the honeycomb cores according to the invention are applied a cover layer on both sides and bonded. Manufacturing of the composite material can take place continuously right after manufacturing of the honeycomb cores or in a separate subsequent step.

The honeycomb core provided with a binder are precious intermediate products in the manufacturing of the sandwich-like composite materials. Another object of the present invention is thus a honeycomb core material, characterized in that the honeycombs are made of a spunbonded non-woven fabric consolidated with a thermoplastic binder and
I) the spunbonded non-woven fabric has a weight per unit area between 50 and 500 g/m², wherein the preceding information refers to a spunbonded non-woven fabric without any chemical binders and other additives,
II) the spunbonded non-woven fabric is made of fibers, which have a titer in the range of 1.0 to 20 dtex, preferably 1.5 to 10 dtex,
III) the spunbonded non-woven fabric comprises no chemical binders,
IV) the spunbonded non-woven fabric comprises at least one thermoplastic binder, the melting point of which is at least 10°C, preferably at least 20°C, in particular at least 30°C below the melting point of the fiber according to II), is however at least 170°C so as to maintain the temperature resistance,
V) the spunbonded non-woven fabric has an air permeability in the area of the non-welded areas of the honeycomb cell in the range of 5 - 2000 l/m²sec, preferably 100 - 300 l/m²sec @ 200 Pa measured according to EN-ISO 9237 and
VI) The spunbonded non-woven fabric used is provided with at least a further binder in addition to the thermoplastic binder.

Alternatively, the cover layer can also contain thermoplastic binders or have a coating with chemical binders resp. thermoplastic binders, which allow bonding with the honeycomb core. Suitable thermoplastic binders for this purpose are polymers, the melting temperature of which is not above, preferably at least 5°C below, in particular at least 10°C below the melting temperature of the thermoplastic binder of the spunbonded non-woven fabric. Suitable chemical binders are the already mentioned chemical binders, i.e. self-cross-linking binders, which harden by means of chemical reaction.
The cover layers are applied by means of a press and optionally under the influence of temperature, depending on the binder used, onto the honeycomb core and pressed with the latter. In this case, the path length of the press plates is adjusted in such a manner that the edges of the honeycomb core material come into contact with both cover layers. Due to the high edge stiffness and the temperature resistance of the spunbonded non-woven fabric, the exerting pressure and, optionally, heat does not lead to damage of the honeycomb core material. Due to the high air permeability of the honeycomb cores, extraordinarily uniform composite material are possible - in particular at high process speeds.

For thermoplastic systems, a pure polyester resp. PET composite material can be produced (recyclable), which material can be used at operating temperatures >90°. Exceptionally high resistance to shearing forces are achieved through good and consistent adhesion, which allows high mechanical loads.

The honeycomb cores according to the invention have, after equipment with a binder for a typical volume weight of 50 - 150 kg/m³ (with reference to a honeycomb cell size of 11 mm), a pressure resistance of >5Mpa. In addition, such honeycomb cores can reach operating temperatures >200°. The preceding information refers to honeycomb cores without cover layers.

The properties of the honeycomb cores according to the invention are advantageous in sandwich structures with duroplastic binder systems, since the porosity allows a simple and autonomous impregnation through binder systems. Due to the porosity, only a small quantity of binder is required in order to nevertheless obtain a high saponification. This saves material, costs and weight. In addition, in so-called "one shot" applications, the cover layer consisting e.g. of reinforcement materials such as glass fiber, carbon fiber, high modulus fibers, e.g. aramid like Kevlar®, Nomex® etc., organic material, wood, aluminium etc.) can be impregnated with the honeycomb core and bonded, which additionally optimizes the shear strength /flexural stiffness.

Thus, sandwich-like composite materials comprising the following are also subject matter of the present invention:
(i) at least one honeycomb core material and
(ii) at least two cover layers, which are bonded together in a planar manner, being separated by a honeycomb core material,
(iii) binding of the honeycomb core material and the cover layers has taken place by means of a binder,
characterized in that the honeycombs are made of a spunbonded non-woven fabric consolidated with a thermoplastic binder and
I) the spunbonded non-woven fabric has a weight per unit area between 50 and 500 g/m², wherein the preceding information refers to a spunbonded non-woven fabric without any chemical binders and other additives,
II) the spunbonded non-woven fabric is made of fibers, which have a titer in the range of 1.0 to 20 dtex, preferably 1.5 to 10 dtex,
III) the spunbonded non-woven fabric comprises no chemical binders,
IV) the spunbonded non-woven fabric comprises at least one thermoplastic binder, the melting point of which is at least 10°C, preferably at least 20°C, in particular at least 30°C below the melting point of the fiber according to II), is however at least 170°C so as to maintain the temperature resistance,
V) the spunbonded non-woven fabric has an air permeability in the area of the non-welded areas of the honeycomb cell in the range of 5 - 2000 l/m²sec, preferably 100 - 300 l/m²sec @ 200 Pa measured according to EN-ISO 9237.

The honeycomb core according to the invention can stand orthogonal to both top surfaces or horizontal on both top surfaces. Preferably, the honeycomb core is orthogonal to both top surfaces.

Binding of the honeycomb core and the cover layers is carried out by means of a binder. Suitable binders for this purpose are both thermoplastic binders and chemical binders. Further suitable binders in the sense of the present invention are also mixtures of monomer and/or oligomer compounds, which react to thermoplastic polymers, for example through polymerization or condensation. In a preferred embodiment, the binder is a thermoplastic binder from the non-woven fabric.

As already mentioned, the binders can be introduced into the honeycomb core or be available as coating onto the top surfaces or as constituent element of the top surfaces.

The sandwich-like composite material according to the invention can be used in many ranges of application, such as in this case the use in acoustic ceiling boards and partition walls, in lightweight construction panels for the construction of caravans, in furniture construction, in the interior of cars e.g. as moisture resistant replacement part for paper honeycombs and likewise for increasing the lightweight construction potential in the exterior of cars, e.g. in the underbody. Also in the construction sector (e.g. scaffolding) the lightweight construction potential and the increase of the life cycle of the material (better ability to repair with respect to swelling wood) is mentioned by the material according to the invention.
Through appropriate modification of the binder system, e.g. by adding flame-retardant additives, the lightweight construction potential can also be used in the public transport sector (e.g. train, bus, plane).

Through appropriate further equipment, e.g. filling the intermediate space that is formed between the cover layers by the honeycomb core with thermal isolation material, e.g. foams or other materials with a low thermal conduction, further applications are possible.

### General measurement methods:

### Air permeability:

The air permeability is determined in accordance with DIN EN ISO 9237 (1995-12).

### Weight per unit area:

The weight per unit area is determined in accordance with DIN EN ISO 29073-1 (1992).

### Measurement of the fiber diameter:

The fiber diameter is determined in accordance with DIN EN ISO 1973 (As of: 1995).

### Measurement of the tractive force:

The tractive force is measured according to DIN 29073, Part 3 (1992)

### Measurement of the edge stiffness:

The edge stiffness is determined based on the determination of the edge crushing resistance of paper for corrugated paperboard applications (see Corrugated Crush test CCT: Tappi T-824, Scan P42). To do so, a special test setup was selected. The spunbonded non-woven fabric to be measured is cut in strips of 100 x 200 mm (w x I) and clamped in a holder with wave-shaped top surface in such a manner that the material is available in defined waves (radius 10 mm = 10 mm deep, 10 mm wide). In this process, 85 mm of the 100 mm width material is clamped, while 15 mm of the non-woven fabric are arc-shaped and free in waves. The measurement is performed by means of a stamp, which generates with a defined speed (50 mm/min) a surface pressure onto the free upper edge of the non-woven material available in waves. The appropriate value corresponds to the edge pressure resp. the edge stiffness. The specific edge stiffness can be computed from the edge pressure [N] and the weight per unit area [g / m²] of the sample.

### Reference Examples:

### Example 1:

Honeycomb cores are manufactured from a thermally consolidated polyester spunbonded non-woven fabric (Evalith® 478/235 of the company Johns Manville Sales GmbH), which comprises no chemical binder. The polyester spunbonded non-woven fabric used has a weight per unit area of 235 g/m² and was additionally reinforced by means of screen embossing. The air permeability is equal to 180 l/m2*s@200Pa according to DIN EN ISO 9237 and the maximum tractive force according to DIN EN 29073-3 is equal to 750 N/5cm (in the longitudinal direction) and 630 N/5cm (in the transverse direction). The thickness of the polyester spunbonded non-woven fabric used is equal to approx. 0.6 mm (according to DIN EN ISO 9073-2).

The specific stiffness values of the honeycomb cores determined by means of an edge stiffness test amount to 1.28 (at 300 N min.).

Pressure tests were performed on the honeycomb panels in accordance with DIN EN ISO 844 (2014) (punch 2,500 mm², measurement speed: 1 - 10 mm/min).

Here, honeycomb pressure test values of 0.83 MPa at 25 mm height and 0.98 MPa at 0.5 mm height were achieved. The volume weight of the honeycomb panel is equal to 50 kg/m³.

### Example 2:

Honeycomb cores are manufactured from a thermally consolidated polyester spunbonded non-woven fabric (SpunFil® 040/253 of the company Johns Manville, Denver), which comprises no chemical binder.

The polyester spunbonded non-woven fabric used is composed of bi-component fibers (core shell) with a low-melting component in the shell and has a weight per unit area of 250 g/m². The non-woven fabric was additionally consolidated mechanically by means of needling. The air permeability is equal to 457 l/m2*s@200Pa according to DIN EN ISO 9237 and the maximum tractive force according to DIN EN 29073-3 is equal to 850 N/5cm (in the longitudinal direction) and 750 N/5cm (in the transverse direction). The thickness of the polyester spunbonded non-woven fabric used is equal to approx. 0.5 mm (according to DIN EN ISO 9073-2).

The specific stiffness values of the honeycomb cores determined by means of an edge stiffness test amount to 1.58 (at 400 N min.).

Pressure tests were performed on the honeycomb panels like in Example 1 in accordance with DIN EN ISO 844 (2014). The pressure test resulted in 1.01 MPa at 25 mm height. The volume weight of the honeycomb panel was equal to 54 kg/m³.

## Claims

1. Use of a spunbonded non-woven fabric based on thermoplastic organic synthetic fibers for manufacturing honeycomb core materials, **characterized in that**
a) the spunbonded non-woven fabric used has a weight per unit area between 50 and 500 g/m² wherein the preceding information refers to a spunbonded non-woven fabric without any chemical binders and other additives,
b) the spunbonded non-woven fabric used is made of fibers, which have a titer in the range of 1.0 to 20 dtex,
c) the spunbonded non-woven fabric used comprises no chemical binders,
d) the spunbonded non-woven fabric used comprises at least one thermoplastic binder, the melting point of which is at least 10°C below the melting point of the fiber according to b), is however at least 170°C so as to maintain the temperature resistance,
e) the spunbonded non-woven fabric used has an air permeability in the range of 5 - 2000 l/m²sec @ 200 Pa measured according to EN-ISO 9237.

2. The use according to claim 1, **characterized in that** the spunbonded non-woven fabric used has only fibers made of melt-spinnable, thermoplastic organic polymers, preferably with a melting point of at least 200°C.

3. The use according to claim 1 or 2, **characterized in that** the spunbonded non-woven fabric used consists of fibers of polyamide, polycaprolactam, aromatic or partially aromatic polyamides, aliphatic polyamides, partially aromatic or fully aromatic polyesters, polyphenylene sulfide (PPS), polymers with ether and keto groups.

4. The use according to claim 1 to 3, **characterized in that** the spunbonded non-woven fabric used is made of polyester.

5. The use according to claim 1 to 4, **characterized in that** the spunbonded non-woven fabric used has a maximum tractive force (in the longitudinal direction) of at least 100 N/5 cm measured according to DIN 29073, Part 3.

6. The use according to claim 1 to 5, **characterized in that** the spunbonded non-woven fabric used has a maximum tractive force (in the transverse direction) of at least 50 N/5 cm measured according to DIN 29073, Part 3.

7. The use according to claim 1 to 6, **characterized in that** the quantity of thermoplastic binder is 10 - 50 % by weight each with reference to the total weight of the spunbonded non-woven fabric.

8. The use according to claim 1 to 7, **characterized in that** the thermoplastic binder is introduced in the form of a separate binder fiber, a granulate or in the form of the low-melting component of a bi-component fiber.

9. The use according to claim 1 to 7, **characterized in that** the thermoplastic binder is selected from the group of polyesters and has a melting temperature that is decreased with respect to the nonwoven fabric raw material by 10 to 50°C.

10. Honeycomb core material, **characterized in that** it was made from a spunbonded non-woven fabric, wherein
a) the spunbonded non-woven fabric used has a weight per unit area between 50 and 500 g/m² wherein the preceding information refers to a spunbonded non-woven fabric without any chemical binders and other additives,
b) the spunbonded non-woven fabric used is made of fibers, which have a titer in the range of 1.0 to 20 dtex,
c) the spunbonded non-woven fabric used comprises no chemical binders,
d) the spunbonded non-woven fabric used comprises at least one thermoplastic binder, the melting point of which is at least 10°C below the melting point of the fiber according to b), is however at least 170°C so as to maintain the temperature resistance,
e) the spunbonded non-woven fabric used has an air permeability in the area of the non-welded areas of the honeycomb cell in the range of 5 - 2000 l/m²sec @ 200 Pa measured according to EN-ISO 9237.

11. A honeycomb core material according to claim 10, **characterized in that** it has an edge stiffness of >1.

12. The honeycomb core material according to claim 10 or 11, **characterized in that** it has a pressure resistance of >0.8 MPa for a volume weight of 20-70 kg/m³.

13. The honeycomb core material according to claim 10 to 12, **characterized in that** the spunbonded non-woven fabric used, which comprises no chemical binders, is provided with at least a further binder in addition to the thermoplastic binder.

14. A method for manufacturing the honeycomb core material according to claims 10 to 13, comprising the following steps:
(a) providing a thermally mergeable spunbonded non-woven fabric (14),
(b) welding two web sections (14a) (16) of the thermally mergeable spunbonded non-woven fabric (14) through connecting a plurality of connecting sections (16),
(c) welding of the assembled web sections (14 a), (14 b) with a next web section (14 c) according to the same method, wherein the new connecting sections (16) are arranged offset (H) with respect to the previously formed connecting sections (16),
(d) repetition of step (c) any number of times,
(e) heating of the compound obtained after step (d),
(f) fanning of the warmed up compound according to (e) towards the honeycomb core material (10),
(g) cooling down of the fanned-apart honeycomb core material (10) for fixing of the formed honeycomb cores,
**characterized in that** the spunbonded non-woven fabric used in step (a)
I) has a weight per unit area between 50 and 500 g/m², wherein the preceding information refers to a spunbonded non-woven fabric without any chemical binders and other additives,
II) the spunbonded non-woven fabric is made of fibers, which have a titer in the range of 1.0 to 20 dtex,
III) the spunbonded non-woven fabric comprises no chemical binders,
IV) the spunbonded non-woven fabric comprises at least one thermoplastic binder, the melting point of which is at least 10°C below the melting point of the fiber according to II), is however at least 170°C so as to maintain the temperature resistance,
V) the spunbonded non-woven fabric has an air permeability in the range of 5 - 2000 l/m²sec @ 200 Pa measured according to EN-ISO 9237, and
VI) the heating according to step e) to a temperature corresponding to the melting temperature of the thermoplastic binder resp. of the fusible binder fibers (lower limit) and at least 10°C below the melting temperature of the carrier fibers (upper limit).

15. The use of the honeycomb core material according to claims 10 to 13 for manufacturing sandwich-like composite materials.

16. A composite material comprising:
(i) at least one honeycomb core material and
(ii) at least two cover layers, which are bonded together in a planar manner, being separated by a honeycomb core material,
(iii) binding of the honeycomb core material and the cover layers has taken place by means of a binder,
**characterized in that** the honeycombs are made of a spunbonded non-woven fabric consolidated with a thermoplastic binder and
I) the spunbonded non-woven fabric has a weight per unit area between 50 and 500 g/m², wherein the preceding information refers to a spunbonded non-woven fabric without any chemical binders and other additives,
II) the spunbonded non-woven fabric is made of fibers, which have a titer in the range of 1.0 to 20 dtex,
III) the spunbonded non-woven fabric comprises no chemical binders,
IV) the spunbonded non-woven fabric comprises at least one thermoplastic binder, the melting point of which is at least 10°C below the melting point of the fiber according to II), is however at least 170°C so as to maintain the temperature resistance,
V) the spunbonded non-woven fabric has an air permeability in the area of the non-welded areas of the honeycomb cell in the range of 5 - 2000 l/m²sec @ 200 Pa measured according to EN-ISO 9237.

## Patentansprüche

1. Verwendung eines Spinnvlieses auf Basis thermoplastischer organischer Synthesefasern zur Herstellung von Wabenkernmaterialien, **dadurch gekennzeichnet, dass**:
a) das verwendete Spinnvlies ein Flächengewicht zwischen 50 und 500 g/m² aufweist, wobei sich die vorstehenden Angaben auf ein Spinnvlies ohne chemische Bindemittel und andere Zusätze beziehen,
b) das verwendete Spinnvlies aus Fasern besteht, die einen Titer im Bereich von 1,0 bis 20 dtex aufweisen,
c) das verwendete Spinnvlies keine chemischen Bindemittel umfasst,
d) das verwendete Spinnvlies mindestens ein thermoplastisches Bindemittel umfasst, dessen Schmelzpunkt mindestens 10 °C unter dem Schmelzpunkt der Faser gemäß b) liegt, jedoch mindestens 170 °C beträgt, um die Temperaturbeständigkeit zu erhalten,
e) das verwendete Spinnvlies eine Luftdurchlässigkeit im Bereich von 5 bis 2000 l/m² s bei 200 Pa, gemessen nach EN-ISO 9237, aufweist.

2. Verwendung nach Anspruch 1, **dadurch gekennzeichnet, dass** das verwendete Spinnvlies nur Fasern aus schmelzspinnbaren, thermoplastischen organischen Polymeren aufweist, vorzugsweise mit einem Schmelzpunkt von mindestens 200 °C.

3. Verwendung nach Anspruch 1 oder 2, **dadurch gekennzeichnet, dass** das verwendete Spinnvlies aus Fasern aus Polyamid, Polycaprolactam, aromatischen oder teilweise aromatischen Polyamiden, aliphatischen Polyamiden, teilweise aromatischen oder vollaromatischen Polyestern, Polyphenylensulfid (PPS), Polymeren mit Ether- und Ketogruppen besteht.

4. Verwendung nach Anspruch 1 bis 3, **dadurch gekennzeichnet, dass** das verwendete Spinnvlies aus Polyester besteht.

5. Verwendung nach Anspruch 1 bis 4, **dadurch gekennzeichnet, dass** das verwendete Spinnvlies eine maximale Zugkraft (in Längsrichtung) von mindestens 100 N/5 cm, gemessen nach DIN 29073, Teil 3, aufweist.

6. Verwendung nach Anspruch 1 bis 5, **dadurch gekennzeichnet, dass** das verwendete Spinnvlies eine maximale Zugkraft (in Querrichtung) von mindestens 50 N/5 cm, gemessen nach DIN 29073, Teil 3, aufweist.

7. Verwendung nach Anspruch 1 bis 6, **dadurch gekennzeichnet, dass** die Menge des thermoplastischen Bindemittels 10 bis 50 Gew.-%, jeweils bezogen auf das Gesamtgewicht des Spinnvlieses, beträgt.

8. Verwendung nach Anspruch 1 bis 7, **dadurch gekennzeichnet, dass** das thermoplastische Bindemittel in Form einer separaten Bindefaser, eines Granulats oder in Form der niedrigschmelzenden Komponente einer Zweikomponentenfaser eingebracht wird.

9. Verwendung nach Anspruch 1 bis 7, **dadurch gekennzeichnet, dass** das thermoplastische Bindemittel aus der Gruppe der Polyester ausgewählt ist und eine Schmelztemperatur aufweist, die in Bezug auf den Vliesstoffrohstoff um 10 bis 50 °C niedriger ist.

10. Wabenkernmaterial, **dadurch gekennzeichnet, dass** es aus einem Spinnvlies hergestellt wurde, wobei
a) das verwendete Spinnvlies ein Flächengewicht zwischen 50 und 500 g/m² aufweist, wobei sich die vorstehenden Angaben auf ein Spinnvlies ohne chemische Bindemittel und andere Zusätze beziehen,
b) das verwendete Spinnvlies aus Fasern besteht, die einen Titer im Bereich von 1,0 bis 20 dtex aufweisen,
c) das verwendete Spinnvlies keine chemischen Bindemittel umfasst,
d) das verwendete Spinnvlies mindestens ein thermoplastisches Bindemittel umfasst, dessen Schmelzpunkt mindestens 10 °C unter dem Schmelzpunkt der Faser gemäß b) liegt, jedoch mindestens 170 °C beträgt, um die Temperaturbeständigkeit zu erhalten,
e) das verwendete Spinnvlies im Bereich der nicht-verschweißten Bereiche der Wabenzelle eine Luftdurchlässigkeit im Bereich von 5 bis 2000 l/m² s bei 200 Pa, gemessen nach EN-ISO 9237, aufweist.

11. Wabenkernmaterial nach Anspruch 10, **dadurch gekennzeichnet, dass** es eine Kantensteifigkeit von > 1 aufweist.

12. Wabenkernmaterial nach Anspruch 10 oder 11, **dadurch gekennzeichnet, dass** es eine Druckfestigkeit von > 0,8 MPa für ein Volumengewicht von 20 bis 70 kg/m³ aufweist.

13. Wabenkernmaterial nach Anspruch 10 bis 12, **dadurch gekennzeichnet, dass** das verwendete Spinnvlies, das keine chemischen Bindemittel umfasst, neben dem thermoplastischen Bindemittel mindestens ein weiteres Bindemittel aufweist.

14. Verfahren zur Herstellung des Wabenkernmaterials nach den Ansprüchen 10 bis 13, umfassend die folgenden Schritte:
(a) Bereitstellen eines thermisch verschmelzbaren Spinnvlieses (14),
(b) Verschweißen zweier Gewebeabschnitte (14a) (16) des thermisch verschmelzbaren Spinnvlieses (14) durch Verbinden mehrerer Verbindungsabschnitte (16),
(c) Verschweißen der zusammengesetzten Gewebeabschnitte (14 a), (14 b) mit einem nächsten Gewebeabschnitt (14 c) nach dem gleichen Verfahren, wobei die neuen Verbindungsabschnitte (16) gegenüber den zuvor gebildeten Verbindungsabschnitten (16) versetzt angeordnet sind (H),
(d) Wiederholung von Schritt (c) beliebig oft,
(e) Erhitzen der nach Schritt (d), erhaltenen Verbindung,
(f) Auffächern der aufgewärmten Verbindung gemäß (e) in Richtung des Wabenkernmaterials (10),
(g) Abkühlen des auseinander gefächerten Wabenkernmaterials (10) zum Fixieren der gebildeten Wabenkerne,
**dadurch gekennzeichnet, dass** das in Schritt (a) verwendete Spinnvlies
I) ein Flächengewicht zwischen 50 und 500 g/m² aufweist, wobei sich die vorstehende Information auf ein Spinnvlies ohne chemische Bindemittel und andere Zusätze bezieht,
II) das Spinnvlies aus Fasern besteht, die einen Titer im Bereich von 1,0 bis 20 dtex aufweisen,
III) das Spinnvlies keine chemischen Bindemittel umfasst,
IV) das Spinnvlies mindestens ein thermoplastisches Bindemittel umfasst, dessen Schmelzpunkt mindestens 10 °C unter dem Schmelzpunkt der Faser gemäß II) liegt, jedoch mindestens 170 °C beträgt, um die Temperaturbeständigkeit zu erhalten,
V) das Spinnvlies eine Luftdurchlässigkeit im Bereich von 5 bis 2000 l/m² s bei 200 Pa, gemessen nach EN-ISO 9237, aufweist und
VI) die Erwärmung gemäß Schritt e) auf eine Temperatur entsprechend der Schmelztemperatur des thermoplastischen Bindemittels bzw. der schmelzbaren Bindefasern (untere Grenze) und mindestens 10 °C unter der Schmelztemperatur der Trägerfasern (obere Grenze) erfolgt.

15. Verwendung des Wabenkernmaterials nach den Ansprüchen 10 bis 13 zur Herstellung sandwichartiger Verbundmaterialien.

16. Verbundmaterial, umfassend:
(i) mindestens ein Wabenkernmaterial und
(ii) mindestens zwei Deckschichten, die plan miteinander verbunden sind und durch ein Wabenkernmaterial getrennt sind,
(iii) das Verbinden des Wabenkernmaterials und der Deckschichten mittels eines Bindemittels erfolgt ist,
**dadurch gekennzeichnet, dass** die Waben aus einem mit einem thermoplastischen Bindemittel verfestigten Spinnvlies bestehen und
I) das Spinnvlies ein Flächengewicht zwischen 50 und 500 g/m² aufweist, wobei sich die vorstehende Information auf ein Spinnvlies ohne chemische Bindemittel und andere Zusätze bezieht,
II) das Spinnvlies aus Fasern besteht, die einen Titer im Bereich von 1,0 bis 20 dtex aufweisen,
III) das Spinnvlies keine chemischen Bindemittel umfasst,
IV) das Spinnvlies mindestens ein thermoplastisches Bindemittel umfasst, dessen Schmelzpunkt mindestens 10 °C unter dem Schmelzpunkt der Faser gemäß II) liegt, jedoch mindestens 170 °C beträgt, um die Temperaturbeständigkeit zu erhalten,
V) das Spinnvlies im Bereich der nicht-verschweißten Bereiche der Wabenzelle eine Luftdurchlässigkeit im Bereich von 5 bis 2000 l/m² s bei 200 Pa, gemessen nach EN-ISO 9237, aufweist.

## Revendications

1. Utilisation d'un non tissé filé-lié à base de fibres synthétiques organiques thermoplastiques pour la fabrication des matériaux de noyaux en nids d'abeilles, **caractérisée en ce que**
a) le non tissé filé-lié utilisé présente un poids par l'unité de surface entre 50 et 500 g/m² où l'information antérieure concerne un non tissé filé-lié sans liants chimiques et d'autres additifs,
b) le non tissé filé-lié utilisé est fait de fibres, qui ont un titre dans la plage de 1,0 à 20 dtex,
c) le non tissé filé-lié utilisé ne contient pas de liants chimiques,
d) le non tissé filé-lié utilisé comprend au moins un liant thermoplastique, le point de fusion duquel est au moins 10°C sous le point de fusion de la fibre selon b), c'est cependant au moins 170°C afin demaintenir la résistance à la température,
e) le non tissé filé-lié utilisé présente une perméabilité à l'air dans la plage de 5-2000 l/m²sec @ 200 Pa mesurée selon EN-ISO 9237.

2. Utilisation selon la revendication 1, **caractérisée en ce que** le non tissé filé-lié utilisé présente seulement les fibres faites de polymères organiques thermoplastiques, filables à l'état fondu, préférablement avec un point de fusion d'au moins 200°C.

3. Utilisation selon la revendication 1 ou 2, **caractérisée en ce que** le non tissé filé-lié utilisé consiste enfibres de polyamide, polycaprolactame, polyamides aromatiques ou partiellement aromatiques, polyamides aliphatiques, polyesters partiellement aromatiques ou entièrement aromatiques, sulfure de polyphénylène (PPS), polymères avec des groupes éther et céto.

4. Utilisation selon la revendication 1 à 3, **caractérisée en ce que** le non tissé filé-lié utilisé est fait de polyester.

5. Utilisation selon la revendication 1 à 4, **caractérisée en ce que** le non tissé filé-lié utilisé présente une force de traction maximale (dans la direction longitudinale) d'au moins 100 N/5 cm mesurée selon DIN 29073, Partie 3.

6. Utilisation selon la revendication 1 à 5, **caractérisée en ce que** le non tissé filé-lié utilisé présente une force de traction maximale (dans la direction transversale) d'au moins 50 N/5 cm mesurée selon DIN 29073, Partie 3.

7. Utilisation selon la revendication 1 à 6, **caractérisée en ce que** la quantité de liant thermoplastique est 10-50% en poids chacune avec référence au poids total du non tissé filé-lié.

8. Utilisation selon la revendication 1 à 7, **caractérisée en ce que** le liant thermoplastique est introduit dans la forme d'une fibre de liant distincte, un granulat ou dans la forme du composant à bas point de fusion d'une fibre bi-composant.

9. Utilisation selon la revendication 1 à 7, **caractérisée en ce que** le liant thermoplastique est choisi du groupe de polyesters et présente une température de fusion qui est diminué à l'égard de la matière première du non tissé par 10 à 50°C.

10. Matériau de noyaux en nids d'abeilles, **caractérisé en ce qu'**il est fait d'un non-tissé filé-lié, où
a) le non tissé filé-lié utilisé a un poids par l'unité de surface entre 50 et 500 g/m² où l'information antérieure concerne un non tissé filé-lié sans liants chimiques et d'autres additifs,
b) le non tissé filé-lié utilisé est fait de fibres, qui ont un titre dans la plage de 1,0 à 20 dtex,
c) le non tissé filé-lié utilisé ne contient pas de liants chimiques,
d) le non tissé filé-lié utilisé contient au moins un liant thermoplastique, le point de fusion duquel est au moins 10°C sous le point de fusion de la fibre selon b), c'est cependant au moins 170°C afin de maintenir la résistance à la température,
e) le non tissé filé-lié utilisé a une perméabilité à l'air dans la zone des surfaces non soudées de la cellule en nids d'abeilles dans la plage de 5-2000 l/m²sec @ 200 Pa mesurée selon EN-ISO 9237.

11. Matériau de noyaux en nids d'abeilles selon la revendication 10, **caractérisé en ce qu'**il a une raideur des bords de >1.

12. Matériau de noyaux en nids d'abeilles selon la revendication 10 ou 11, **caractérisé en ce qu'**il a une résistance à pression de > 0,8 MPa pour un poids volumique de 20-70 kg/m³.

13. Matériau de noyaux en nids d'abeilles selon la revendication 10 à 12, **caractérisé en ce que** le non tissé filé -lié utilisé, qui ne contient pas de liants chimiques, est pourvu avec au moins un autre liant en plus du liant thermoplastique.

14. Procédé de fabrication le matériau de noyaux en nids d'abeilles selon les revendications 10 à 13, comprenant les suivantes étapes:
(a) pourvoir un non tissé filé-lié thermiquement fusionnable (14),
(b) coller deux sections (14a) (16) du non tissé filé-lié thermiquement fusionnable (14) en reliant une pluralité de sections de connexion (16),
(c) coller les sections assemblées (14a), (14b) avec une suivantesection (14c) selon le même procédé, où les nouveaux sections de connexion (16) sont arrangées en décalage (H) par rapport aux sections de connexion antérieurement formées (16),
(d) répétition de l'étape (c) un nombre quelconque de fois,
(e) réchauffer le composé obtenu après l'étape (d),
(f) ventiler le composé réchauffé selon (e) vers le matériau de noyaux en nids d'abeilles (10),
(g) refroidir le matériau de noyaux en nids d'abeilles ventilé (10) pour fixer les noyaux en nids d'abeilles formés,
**caractérisé en ce que** le non tissé filé-lié utilisé dans l'étape (a)
I) a un poids par l'unité de surface entre 50 et 500 g/m², où l'information antérieure concerne un non tissé filé-lié sans liants chimiques et d'autres additifs,
II) le non tissé filé-lié est fait de fibres, qui ont un titre dans la plage de 1,0 à 20 dtex,
III) le non tissé filé-lié ne contient pas de liants chimiques,
IV) le non tissé filé-lié contient au moins un liant thermoplastique, le point de fusion duquel est au moins 10°C sous le point de fusion de la fibre selon ii), c'est cependant au moins 170°C afin de maintenir la résistance à la température,
V) le non tissé filé-lié a une perméabilité à l'air dans la plage de 5-2000 l/m²sec @ 200 Pa mesurée selon EN-ISO 9237, et
VI) réchauffer selon l'étape e) à une température correspondant à la température de fusion du liant thermoplastique resp. des fibres à liant fusibles(limite inférieure) et au moins 10°C sous la température de fusion des fibres support (limite supérieure).

15. Utilisation du matériau de noyaux en nids d'abeilles selon les revendications 10 à 13, pour la fabrication de matériaux composites de type sandwich.

16. Matériau composite comprenant:
(i) au moins un matériau de noyaux en nids d'abeilles et
(ii) au moins deux couches de recouvrement, qui sont liées ensemble d'une manière planaire, étant séparées par un matériau de noyaux en nids d'abeilles,
(iii)la liaison du matériau de noyaux en nids d'abeilles et les couches de recouvrement a lieu par moyen d'un liant
**caractérisé en ce que** les nids d'abeilles sont faites d'un non tissé filé-lié consolidé avec un liant thermoplastique et
I) le non tissé filé-lié présente un poids par l'unité de surface entre 50 et 500 g/m², où l'information antérieure concerne un non tissé filé-lié sans liants chimiques et d'autres additifs,
II) le non tissé filé-lié est fait de fibres, qui ont un titre dans la plage de 1,0 à 20 dtex,
III) le non tissé filé-lié ne contient pas de liants chimiques,
IV) le non tissé filé-lié contient au moins un liant thermoplastique, le point de fusion duquel est au moins 10°C sous le point de fusion de la fibre selon ii), c'est cependant au moins 170°C afin de maintenir la résistance à la température,
V) le non tissé filé-lié présente une perméabilité à l'air dans la zone des surfaces non collées de la cellule en nids d'abeilles dans la plage de 5-2000 l/m²sec @ 200 Pa mesurée selon EN-ISO 9237.
